# EUROPEAN PATENT SPECIFICATION

(11) **EP 4 028 777 B1**
(45) Date of publication and mention of the grant of the patent: **07.05.2025**
(21) Application number: 20780463.4
(22) Date of filing: 10.09.2020
(51) Int. Cl.: G01N 35/04, G01N 1/00

(54) **REMOTE SAMPLE DELIVERY SYSTEM**
SYSTEM ZUR FERNABGABE VON PROBEN
SYSTÈME DE DISTRIBUTION D'ÉCHANTILLON À DISTANCE

(30) Priority: 13.09.2019 US 201962900116 P
(43) Date of publication of application: 20.07.2022
(73) Proprietor: Beckman Coulter, Inc., Brea, CA 92822 (US)
(72) Inventor: MENHARDT, Wido, Los Gatos, California 95030 (US)
(74) Representative: Maiwald GmbH
(86) International application number: PCT/US2020/050057
(87) International publication number: WO 2021/050635

(56) References cited:
- CN-A- 106 882 363
- CN-A- 106 882 363
- US-A1- 2015 140 668
- US-A1- 2016 349 278
- US-A1- 2016 349 278
- US-A1- 2017 129 603
- US-A1- 2017 129 603

## Description

### CLAIM OF PRIORITY

This patent application claims the benefit of priority to U.S. Application Serial No. 62/900,116, filed September 13, 2019.

### TECHNICAL FIELD

The subject matter disclosed herein generally relates to a remote sample delivery system for an automated sample test track.

US 2015/140668 A1 describes an automation system for an in vitro diagnostics environment including a plurality of intelligent carriers that include onboard processing and navigation capabilities. The intelligent carriers can include one or more image sensors to observe the relative motion of the track as the carrier traverses it. The carriers can also observe position marks on the track surface to provide absolute position information, which can include additional data, such as routing instructions. Synchronization marks may be provided to correct errors in the observed trajectory.

CN 106 882 363 A describes an unmanned aerial vehicle transportation system for transporting hospital blood samples and a transportation method. The unmanned aerial vehicle transportation system comprises blood sample collection terminals, blood sample receiving terminals, sample boxes and unmanned aerial vehicles, wherein the blood sample collection terminals are arranged in all inpatient areas.

US 2016/349278 A1 describes an analytical laboratory system and method for processing samples. A sample container is transported from an input area to a distribution area by a gripper comprising a means for inspecting a tube. An image is captured of the sample container. The image is analyzed to determine a sample container identification. A liquid level of the sample in the sample container is determined. A scheduling system determines a priority for processing the sample container based on the sample container identification. The sample container is transported from the distribution area to a subsequent processing module by the gripper.

US 2017/129603 A1 describes an unmanned aerial vehicle (UAV) for transporting a payload is provided. The UAV comprises a body and one or more propellers rotatably connected to the body. The UAV further comprises a battery mounted to the body. The battery is releasable from the bottom of the UAV. The UAV further comprises a payload container mounted to the body. The payload container is releasable from the bottom of the UAV to a landing platform associated with a UAV station.

### SUMMARY

The underlying technical problem is solved by the subject-matter according to the independent claims. Additional embodiments are defined in the dependent claims.

### BRIEF DESCRIPTION OF THE DRAWINGS

Some embodiments are illustrated by way of example and not limitation in the figures of the accompanying drawings.
FIG. 1 is a biological sample test system, in an example embodiment.
FIG. 2 is an example of a biological sample test system in an extended operation area, in an example embodiment.
FIG. 3 is a block diagram illustrating components of a machine able to read instructions from a machine-readable medium.
FIG. 4 is a user interface for tracking containers within a sample test track, in an example embodiment.

### DETAILED DESCRIPTION

Example methods and systems are directed to a remote sample delivery system, preferably an remote sample delivery system for an sample test track, preferably an automated sample test track. Examples disclosed herein merely typify possible variations. Unless explicitly stated otherwise, components and functions are optional and may be combined or subdivided, and operations may vary in sequence or be combined or subdivided. In the following description, for purposes of explanation, numerous specific details are set forth to provide a thorough understanding of example embodiments. It will be evident to one skilled in the art, however, that the present subject matter may be practiced without these specific details.

In one embodiment, a sample test tracks, which also hereinafter may refer to an automated sample test track, may obtain a biological sample and move the sample along a container conveyance arrangement to various test stations. In an example embodiment the biological sample may be a bodily fluid such as blood. In a further embodiment, the term test station as mentioned herein may refer to an automated test station. In a further embodiment, the test stations may perform discrete tests on the biological sample to assess for various conditions based on a list of tests ordered by a professional. In an example embodiment, the professional includes a medical professional such as a physician In a further embodiment, the container conveyance arrangement will deliver the sample to test stations that may be configured to perform tests that have been ordered and skip test stations that correspond to tests that have not been ordered.

In a further embodiment, operation of the biological sample within the sample test track may be contingent on bringing the biological sample to the sample test track. In one embodiment, either the biological sample, the sample test track, and/or both may be in remote locations. In a further embodiment, various sample test tracks may be available for use, but some of the sample test tracks may include test stations that are not able to perform all of the ordered tests. In a further embodiment, some of the sample test tracks may include delivery of the sample to a sample test track that may not be able perform all of the ordered tests. In a further embodiment, due to degradation of the biological sample over time it may become detrimental to a future ability of the tests to be performed. In a further embodiment, various sample test tracks in a given area may be relatively busier and have longer a wait time to run the tests on the biological samples than others in a given area. In a further embodiment, sending or routing a biological sample to a sample test track that has a large backlog may be inefficient and introduce unnecessary delay in obtaining test results.

In one embodiment. a remote sample delivery system has been developed that may allow for a relatively rapid and efficient transportation of biological samples to sample test tracks. In a further embodiment, the remote sample delivery system may be based on a unmanned autonomous vehicle (UAV) or "drone" that may be configured to secure a container for a biological sample. In a further embodiment, UAV may be configured to read a sample identifier, such as a barcode, radio frequency identifier ("RFID") tag, a sensor, a MEMS, an NFC sensor, a NEMS etc. In a further embodiment, the UAV may travel to a sample receiving station, preferably automatically, on a sample test track, and deposit the container on the sample test track. In a further embodiment, where multiple sample test tracks are available, the system may select a sample test track based on capacity of and wait time for each sample test track and the tests ordered for the biological sample, as provided on the sample identifier. In one embodiment, the moment a biological sample is picked up and an identifier attached, the UAV may be configured to transmit data to the system, which can pre-calculate the sample test track and reserve the test track based on the test ordered for better efficiency.

One embodiment discloses a biological sample test system. In a further embodiment, the biological sample test system may include a remote sample delivery system, preferably an automated sample delivery system that may be configured to secure a container for a biological sample. In a further embodiment, the container may include a sample identifier.

In a further embodiment, the biological sample test system may include a sample receiving station. In a further embodiment, the sample receiving station may be configured to receive the container based on a sample identifier. In a further embodiment, the remote sample delivery system may be configured to navigate to the sample receiving station without any human intervention upon the container being secured to the remote sample delivery system.

In a further embodiment, a sample test track may include a plurality of test stations. In a further embodiment, a container conveyance arrangement may be configured to sequentially deliver the container to individual ones of the plurality of test stations based, at least in part, on sample identifier.

In a further embodiment, the remote sample delivery system may be configured to navigate to the sample receiving station based, at least in part, on the sample identifier. In a further embodiment, the biological sample test system may include a plurality of sample receiving stations and a plurality of sample test tracks. In a further embodiment, each individual ones of the sample test tracks may be associated with one of the plurality of sample receiving stations. In a further embodiment, the remote sample delivery system may be configured to deliver the container to a predetermined one of the plurality of sample receiving stations based, at least in part, on an associated one of the plurality of sample test tracks.

In a further embodiment, each of the plurality of sample test tracks may include a mix of test stations. In a further embodiment at least one of the plurality of sample test tracks may have a different mix of test stations than another of the plurality of sample test tracks. In a further embodiment, the remote sample delivery system may be configured to navigate to one of the plurality of sample receiving stations based, at least in part, on the mix of test stations of an associated one of the plurality of sample test tracks.

In a further embodiment, the sample identifier may correspond to a series of tests to be performed on the biological sample. In a further embodiment, the remote sample delivery system may be configured to navigate to the one of the plurality of sample receiving stations based on the mix of test stations of the associated one of the plurality of sample tracks being able to perform the series of tests.

In a further embodiment, each of the plurality of sample test tracks may have an availability status. In a further embodiment, the remote sample delivery system may be configured to navigate to the one of the plurality of sample receiving stations based on the availability status of the associated one of the plurality of sample tracks. In a further embodiment, each of the plurality of sample test tracks may be configured to update its availability status based, at least in part, on an expected wait time for a sample to be tested. In a further embodiment, the remote sample delivery system may be configured to navigate to a plurality of sample receipt locations and secure at least one container at each of the plurality of sample receipt locations.

A further embodiment may include securing, with a remote sample delivery system, a container for a biological sample using the system as disclosed above.

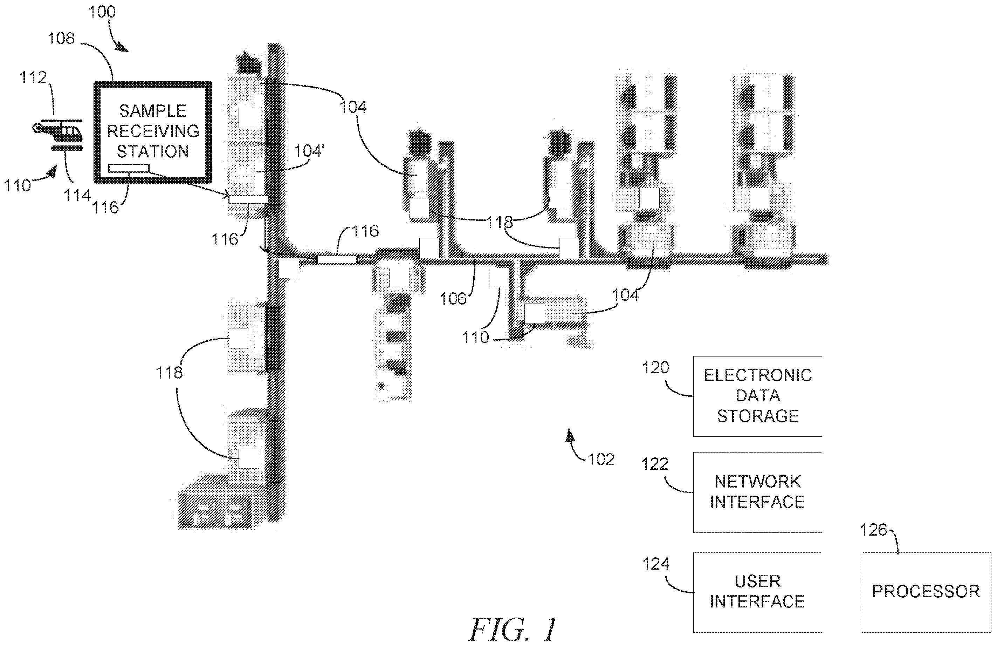

FIG. 1 illustrates a biological sample test system 100, in an example embodiment. A sample test track 102 includes a plurality of test stations 104 connected by a container conveyance arrangement 106 (also referred to broadly as a container conveyance system). The test stations 104 may include various capabilities depending on the type of biological samples to be tested. In an example embodiment for blood test, any given tests station 104 may be able to perform pre- or post-analytical operations, including assessing, accessing, or closing off a container; immunoassay tests; coagulation tests and/or operations to promote coagulation; microbiology tests; molecular tests; hematology tests; and/or chemistry tests. The container conveyance arrangement 106 may be or include any suitable system with which to selectively move a container from one test station 104 to another test station 104 based on the tests ordered for the sample in the container, skipping test stations 104 that do not perform tests that have been ordered. The container conveyance system 106 may include, but is not limited to, conveyor belts, robotic arms and/or self-propelled vehicles.

The biological sample delivery system 100 further includes a sample receiving station 108 coupled to a pre-analytical test station 104'. The pre-analytical test station 104' may include intelligent multifunctional input. The sample receiving station 108 includes a location toreceive a remote sample delivery system 110. Where the remote sample delivery system 110 is based on an UAV, the sample receiving station 108 includes a landing pad for the UAV. The sample receiving station 108 additional includes a device configured to secure a container from the remote sample delivery system 110 and transport the container from the remote sampledelivery system 110 to the pre-analytical test station 104', for example a roboticarm, a bulk sorter, and the like.

As noted, the remote sample delivery system 110 may be based onan UAV, but may alternatively be based on any suitable automated vehicle, including ground systems. For the purposes of this description, an UAV will beutilized for illustrative purposes.

In the illustrative example, the remote sample delivery system 110 includes an aerial unmanned autonomous vehicle 112 (UAV), a sample container securing mechanism 114, such as a test tube holder, and a sample identifier reader, such as a barcode reader, an RFID reader, or other systems known in the art or disclosed previously, including a visual scanner for color coded components of the container and the like. The sample container securing mechanism 114 may grip or otherwise enclose the sample container and may optionally provide environmental control, such as heating or cooling, as appropriate, systems to promote coagulation of the sample or other pre- analytical operations as appropriate, and the like. The sample identifier may include a unique identifier for the sample; a unique identifier for the patient fromwhom the sample was obtained; a date and time the sample was obtained; a unique identifier for the healthcare provider that obtained the sample; a destination for tests results; and discrete tests that are to be performed on the biological sample by test stations 104.

Upon the remote sample delivery system 110 landing with or otherwise delivering a container 116 at or to the sample receiving station 108, the sample receiving station 108 may secure the container 116, for example, witha robotic arm, and move the container 116 to the pre-analytical test station 104'. The pre-analytical test station 104' may either obtain from the remote sample delivery system 110 the information from the sample identification or may conduct its own read of the sample identifier to obtain relevant information related to which tests are to be performed. The pre-analytical test station 114' may receive containers 116 of any various types and sizes and may prioritize containers 116 based on a priority of the container, e.g., prioritizing STAT containers highest. The pre-analytical test station 114' may identify containers 116 based on, e.g., a physical property of the container 116, such as cap color, may check the sample volume and weight, may check a unique identifier, as disclosed herein, may capture an image of the container 116 and may identify a pre-spun status designed to be detected. The pre-analytical test station 114' or another test station 114 may utilize synchronized dual centrifuges for workload balance between and among the various containers 116 and my include integrated cap removing devices to provide access to the biological sample contained within the containers 116. The pre-analytical test station 114 may further include an automated aliquoter. Upon completion of the pre-analytical procedures and operations, the sample test track 102 may then transport the container 116 along the container conveyance system 106 to the various test stations 104 that correspond to the test as included on the sample identifier.

While containers 116 may be transported individually, it is to be recognized and understood that facilitation of operation of the system 100 may involve clustering containers 116 and moving such clusters of containers 116 through the system 100 or portions of the system and performing operations on each of the containers 116 within a given cluster. In various examples, clusters may be formed with racks or other container holders. In an example, test tube racks may be utilized to cluster test tube containers 116. In such an example, the test tube rack is configured to receive and secure, at least in part, test tube containers 116. Robotic arms may grasp or otherwise secure individual test tube containers 116 contained within the test tube rack and remove the individual test tube container 116 to variously test, process, or transfer the individual test tube container 116 to another test tube rack. In such an example, the test tube rack allows for the test tube containers 116 to be stored vertically with a cap or lid oriented up to prevent spills and provide ease of access. In various examples, one of the test stations may be or may include a universal rack-builder unit, e.g., for chemistry systems, hematology workcells, etc.

In an example, the test tube racks include a six-by-six rack with capacity for thirty-six test tubes. Such test tube racks have dimensions of 149 millimeters by 149 millimeters, a height of 74.4 millimeters, and a net weight of 250 grams. In an example, the test tube racks include a six-by-fourteen rack with capacity for eighty-four test tubes. Such test tube racks have dimensions of 319 millimeters by 174 millimeters, a height of 74.4 millimeters, and a net weight of 570 grams. In an example, the test tub racks include a storage rack with a capacity for 105 test tubes. Such storage racks have dimensions of 132 millimeters by 308 millimeters, a height of 46 millimeters, and a net weight of 474 grams.

The sample test track 102 includes various identifier readers 118 positioned throughout. The identifier readers 118 are configured to identify containers 116 according to whatever mechanisms are utilized to provide sample identifiers as noted above, e.g., barcode readers, RFID tag readers, and so forth. The identifier readers 118 are positioned within test stations 104 and at various points on the container conveyance system 106. Such locations may be selected in order to give a desired degree of resolution as to the location and status of each container 116 within the sample test track 102.

The biological sample test system 100 further includes an electronic data storage 120, a network interface 122, a user interface 124, and a processor 126. Those components 120, 122, 124, 126 may be local to the system 100 or may be accessed remotely by the system 100. The network interface 122 communicatively couples the identifier readers 118, electronic data storage 120, user interface 124, and processor 126 together. The electronic data storage 120 stores records, such as electronic medical records ("EMRs") relating to the containers 116 within the system 100 and the samples contained therein, in an electronic data repository. The processor 126 provides general processing for the system 100.

Upon a container 116 passing through an identifier reader 118, the record corresponding to that container 116 is updated with to note which specific identifier reader 118 the container has most recently passed by. Inferentially, the container 116 would then be understood to be located between the identifier reader 118 that had last noted the presence of the container 116 and the immediately subsequent identifier reader 118 within the sample test track 102. If the identifier reader 118 is located within a test station 104 then it is to be understood that the identified container 116 is within the test station 104.

As the container 116 passes through various test stations 104, the record may similarly be updated with the results of the tests run within the test station 104. Thus, as a container 116 progresses through the sample test track 102 the record for the container 116 and the sample contained therein will increasingly be populated with information from test results and the location of the container 116 within the system sample test track 102.

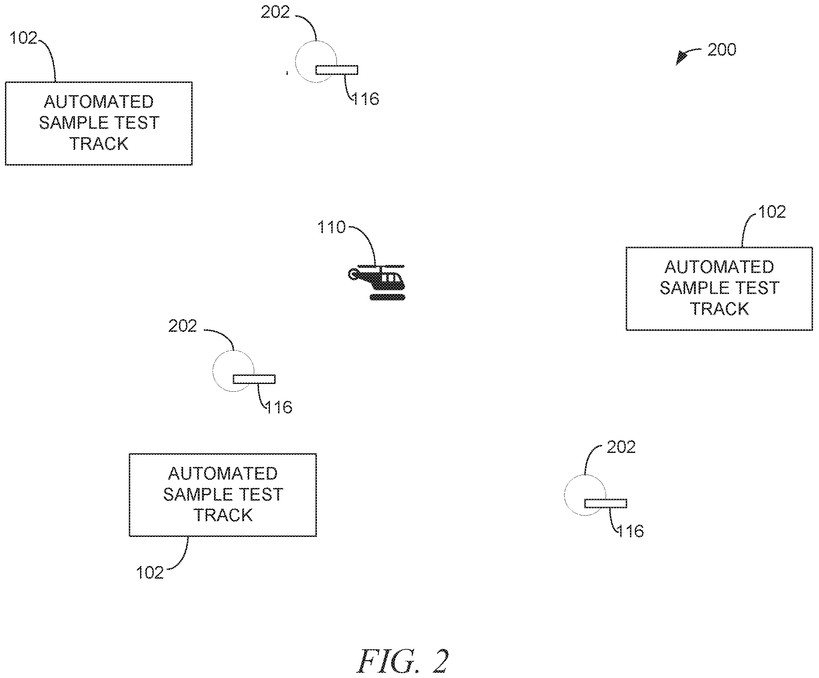

FIG. 2 illustrates an example of a biological sample test system 200 in an extended operation area, in an example embodiment. In the illustrated example, there are multiple sample test tracks 102 to which a biological sample may be delivered. In various examples, the various sample test tracks 102 include different test stations 104, meaning that certain sample test tracks 102 may be able to perform a given test while others may not. Moreover, each sample test track 102 may have a variety of containers 116 in various stages of tests, including waiting for tests to be performed, meaning each sample test track 102 may have a wait time or expected time until tests may be expected to be completed.

Located within a transportation distance, e.g., a range of operation of the automated remote sample delivery system, of the biological sample test system 200 generally are multiple sample pickup locations 202. A sample pickup location 202 may be a site where a biological sample may be obtained, placed in a container 116 with a sample identifier, and made ready to be secured by the remote automated sample delivery system 110, such as a hospital, clinic, pharmacy, or any location that is suitably equipped, including a private residence or non-medical commercial or industrial facility. The sample pickup locations 202 have the capacity for the remote automated sample delivery system 110 to land or to access without necessarily landing.

The biological sample test system 200 generally includes processing capabilities, as disclosed herein, to plan a route of the automated remote sample delivery system 110 to pick up containers 116 from various sample pickup locations 202 and deliver the containers 116 to various automated sample test tracks 102. The route planning may be based on criteria related to the capabilities and availabilities of the automated sample test tracks 102, the time necessary to transit between and among the automated sample test tracks 102 and the sample pickup locations 202, and the priority of any given sample, e.g., if a sample has an urgent or time-sensitive status. Such processing capabilities may be included across the biological sample test system 200 in the form of networked processors, e.g., via cellular, WiFi, or other wired or wireless networking protocols, as well as remotely available, e.g., "cloud" computing services. In various examples, the automated remote sample delivery system 110 includes an onboard processor that is capable of acting independently or in conjunction with other processors.

The route processing may be relatively simple or complex, based on the processing capabilities and information available. Thus, for instance, when the components of the biological sample test system 200 are fully networked and available generally and the system 200 "knows" where all of the containers 116 for pickup are located, the location of the remote sample delivery system 110, and the availability and capabilities of the sample test tracks 102, the system 200 may optimize the pickup and delivery of containers 116 based on total time to process each container 116, or based on a priority of each sample 116, or according to any other consideration. Thus, for instance, the system 200 may cause the remote sample delivery system 110 to visit multiple sample pickup sites 202 before visiting a single sample test track 102 that is capable of handling all of the containers 116 that are picked up at the visited sample pickup sites 202. Further, if efficient for time, the remote sample delivery system 110 may pick up multiple containers 116 and then visit multiple automated sample test tracks 102, leaving one or more containers 116 at each sample test tracks 102 dependent on the capabilities and availability of each of the sample test tracks 102.

Moreover, where the remote sample delivery system 110 is limited to its own onboard processing for route calculation then the routes may be relatively simple. The remote sample delivery system 110 may proceed to a pickup location, obtain the container 116, and then transit to either the nearest sample test track 102 or to the nearest sample test track 102 that the remote sample delivery system 110 "knows" to have the necessary capabilities.

While the illustrated example embodiment of FIG. 2 includes multiple automated sample test tracks 102, it is to be recognized and understood that various principles disclosed with respect to FIG. 2 may be applied to circumstances in which only one sample test track 102 is included in the biological sample test system 200. Thus, in such examples, the remote sample delivery system 110 may only transit between sample pickup locations 202 and the sample test track 102. Considerations of available tests and test wait time or backlog may not factor into decision about how the remote sample delivery system 110 operates when only one sample test track 102 is available or otherwise included in the biological sample test system 200.

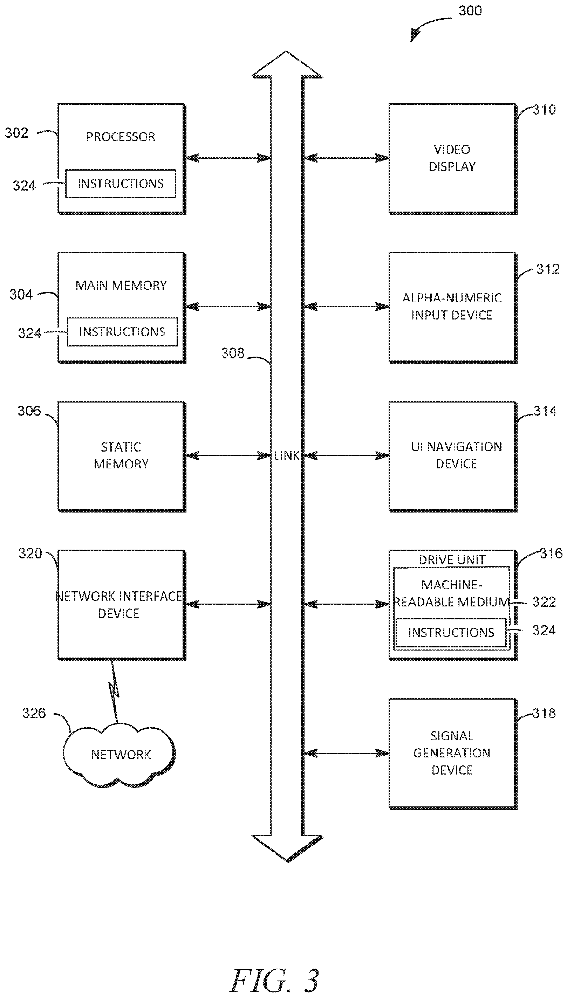

FIG. 3 illustrates a block diagram illustrating components of a machine 300, according to some examples, able to read instructions from a machine-readable medium (*e.g.*, a machine-readable storage medium) and perform any one or more of the methodologies discussed herein. Specifically, FIG. 3 shows a diagrammatic representation of the machine 300 in the example form of a computer system and within which instructions 324 (*e.g.*, software) for causing the machine 300 to perform any one or more of the methodologies discussed herein may be executed. In alternative examples, the machine 300 operates as a standalone device or may be connected (*e.g*., networked) to other machines. In a networked deployment, the machine 300 may operate in the capacity of a server machine or a client machine in a server-client network environment, or as a peer machine in a peer-to-peer (or distributed) network environment. The machine 300 may be a server computer, a client computer, a personal computer (PC), a tablet computer, a laptop computer, a netbook, a set-top box (STB), a personal digital assistant (PDA), a cellular telephone, a smartphone, a web appliance, a network router, a network switch, a network bridge, or any machine capable of executing the instructions 324, sequentially or otherwise, that specify actions to be taken by that machine. Further, while only a single machine is illustrated, the term "machine" shall also be taken to include a collection of machines that individually or jointly execute the instructions 324 to perform any one or more of the methodologies discussed herein.

The machine 300 includes a processor 302 (e.g., a central processing unit (CPU), a graphics processing unit (GPU), a digital signal processor (DSP), an application specific integrated circuit (ASIC), a radiofrequency integrated circuit (RFIC), or any suitable combination thereof), a main memory 304, and a static memory 306, which are configured to communicate with each other via a bus 308. The machine 300 may further include a graphics display 310 (e.g., a plasma display panel (PDP), a light emitting diode (LED) display, a liquid crystal display (LCD), a projector, or a cathode ray tube (CRT)). The machine 300 may also include an alphanumeric input device 312 (e.g., a keyboard), a cursor control device 314 (e.g., a mouse, a touchpad, a trackball, a joystick, a motion sensor, or other pointing instrument), a storage unit 316, a signal generation device 318 (e.g., a speaker), and a network interface device 320.

The storage unit 316 includes a machine-readable medium 322 on which is stored the instructions 324 (e.g., software) embodying any one or more of the methodologies or functions described herein. The instructions 324 may also reside, completely or at least partially, within the main memory 304, within the processor 302 (e.g., within the processor's cache memory), or both, during execution thereof by the machine 300. Accordingly, the main memory 304 and the processor 302 may be considered as machine-readable media. The instructions 324 may be transmitted or received over a network 326 via the network interface device 320.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 322 is shown in an example to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing or carrying instructions (e.g., software) for execution by a machine (e.g., machine 300), such that the instructions, when executed by one or more processors of the machine (e.g., processor 302), cause the machine to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" shall accordingly be taken to include, but not be limited to, one or more data repositories in the form of a solid-state memory, an optical medium, a magnetic medium, or any suitable combination thereof.

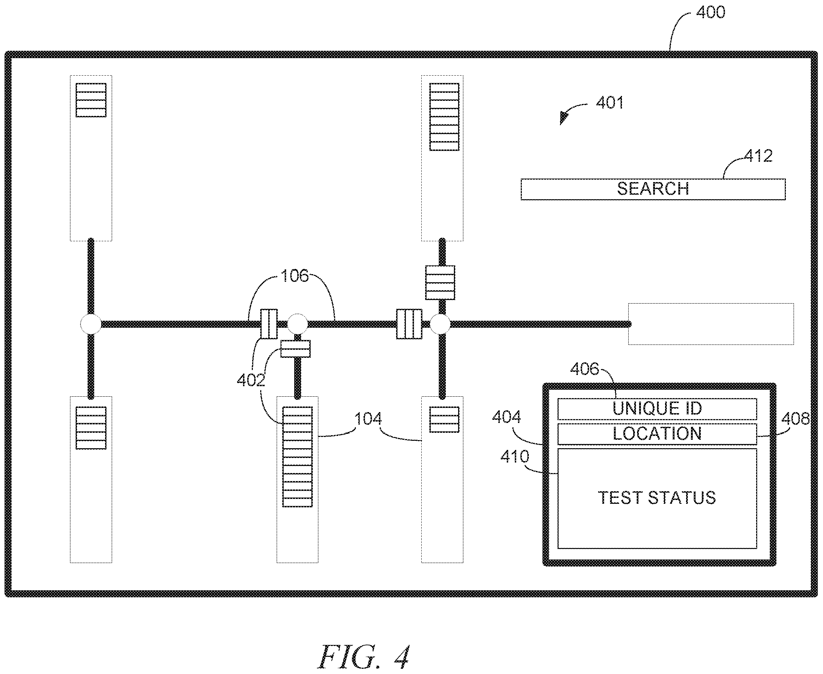

FIG. 4 is a user interface 400 for tracking containers 116 within the sample test track 102, in an example embodiment. The user interface 400 may be on a computer display or on a display for a tablet computer, smartphone, or the like. The user interface 400 may have or be a touchscreen interface and/or may be interfaced with via a mouse or other remote device.

The user interface 400 includes an abstract diagram 401 of the sample test track 102 generally and the test stations 104 in particular overlaid with icons 402 of containers 116 and where the containers 116 are based on the location of the container 116 obtained from the associated record stored in the electronic data storage 120. In the illustrated example, each icon 402 is generic with no particular distinguishing information unless a user selects the icon 402, whereupon information, such as a unique identifier of the associated container 116, may be displayed. In alternative examples, however, some or all of the icons 402 are accompanied by a unique identifier of the associated container 116.

While the illustrated example of the diagram 401 is abstract, it is to be recognized and understood that the user interface 400 may optionally provide less abstract imagery. For instance, the icons 402 may be images of containers or vials, the automated test stations 104 may be depicted with various degrees of photo-realism, and so forth. The user interface 400 may provide a mechanism for switching between abstract and more-realistic images.

In various examples, each icon 402 is the same. However, in alternative examples, icons 402 may differ in order to provide status information for the associated container 116. For instance, icons 402 may vary in color depending on the status of the container 116; if the container 116 is actively being tested by an automated test station 104 then the icon 402 may be green; if the container 116 is in transit on the container conveyance system 106 then the icon 402 may be yellow; if the container 116 is waiting to be tested in a test station 104 then the icon 402 may be red; and so forth. Moreover, the icons 402 may vary in appearance in more ways than simply changing color to denote the status of the container 116 and the sample within, as desired. Further, where multiple containers 116 are essentially co-located, e.g., because the containers 116 are located in the same test tube holder, the icons 402 may be enlarged or otherwise changed to denote representing multiple individual, co-located containers 116.

Upon selecting an icon 402, a window 404 may display information about the container 116, the sample within, and the status of the container 116 within the automated sample test track 102 based on the record of the container 116 as obtained from the electronic data storage 120. As illustrated, the window 404 displays a unique identifier 406; a location description 408 of the current location of the container 116; and test status 410, detailing the tests that have been performed, the results of those tests, and the tests that are yet to be performed. It is to be recognized and understood that any pertinent, desired information may be obtained and displayed in the window 404, and that the window may provide one or more links to other sources of information regarding the container 116 and sample that may be impractical or impossible to display in the window 404.

The user interface 400 further includes a search line 412, allowing a user to input search terms to identify a desired container 116. The search terms may include any information about the container 116 and sample included in the associated record, and the processor 118 may compare the search terms against each record to identify one or more records that correspond to the search terms. In the even that more than one container 116 corresponds to the search terms the user may be prompted to select one among the potential results. Upon identifying the desired container 116 based on the search terms, the user interface 400 may highlight or otherwise draw attention to the associated icon 402 to illustrate the location of the container 116 within the automated sample test track 102. In various examples, information relating to the container 116 and sample may be displayed in the window 404. If one particular container is not identified then each icon 402 pertaining to a potential container 116 may be highlighted or otherwise identified.

The user interface 400 may further provide information about the automated sample test track 102 and the status of the automated test stations 104 and container conveyance system 106. In an example, a user may select a particular automated test station 104 to obtain information about the automated test station's 104 function and status, e.g., a number of containers 108 that are being tested by the automated test station 104, a capacity of the automated test station 104 to take more containers, and an operational status of the automated test station 104, e.g., operational, non-operational, reduced capacity, etc.

Moreover, the user interface 402 may provide an indication of backlogs. For instance, if more than a predetermined number of containers 108 are in a particular location then the user interface 402 may highlight the location or otherwise denote that a backlog has occurred. The user interface 402 may further denote the number of containers 108 that are present in the location and/or the number of container 116 by which the predetermined number is exceeded.

Further, the user interface 402 may an identify automated test station 104 that is potentially out of compliance and provide an alert noting the potential failure. The system 100 generally and the processor 118 specifically may identify the potential failure based on a comparison of the records of containers 108 and samples that have been tested by the automated test station 104 against standard pass/fail criteria for the associated test. If a higher percentage of those tests have failed over a predetermined period of time, the automated test station 104 may be flagged as potentially having failed and the user interface 400 highlight or otherwise draw attention to the automated test station 104 with an accompanying alert detailing the basis for the finding of the potential failure.

Techniques such as artificial intelligence or machine learning may be used to perform the method as disclosed herein, wherein the system can automatically learn and improve from experience of past history that may be stored in a repository. Other techniques may be used to automate and improve the system. In an example embodiment, the UAV may access the repository to efficiently automate the processing of the biological sample based on historical data present in the repository.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain examples are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

A hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulationof physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, torefer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using wordssuch as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non- exclusive "or," unless specifically stated otherwise.

## Claims

1. A biological sample test system (100), comprising:
a remote sample delivery system (110) comprising an aerial unmanned autonomous vehicle (112) and a sample container securing mechanism (114) secured to the aerial unmanned autonomous vehicle (112), configured to secure a container (116) for a biological sample, the container (116) including a sample identifier;
a sample receiving station (108), configured to receive the container (116) from the remote sample delivery system (110), wherein the remote sample delivery system (110) is configured to automatically navigate to the sample receiving station (108) upon the container (116) being secured to the remote sample delivery system (110), and wherein the remote sample delivery system (110) is configured to navigate to the sample receiving station (108) based, at least in part, on the sample identifier; and
a sample test track (102), comprising a pre-analytical test station (104') and a plurality of test stations (104) and a container conveyance system (106) configured to sequentially deliver the container (116) to individual ones of the plurality of test stations (104) based, at least in part, on the sample identifier,
wherein the sample receiving station (108) is coupled to the pre-analytical test station (104'), and
wherein the sample receiving station (108) includes a landing pad for the aerial unmanned autonomous vehicle (112).

2. The system of claim 1, wherein the biological sample test system (100) further comprises a plurality of sample receiving stations (108) and a plurality of sample test tracks (102), each individual ones of the sample test tracks (102) associated with one of the plurality of sample receiving stations (108), and wherein the remote sample delivery system (110) is configured to deliver the container (116) to a predetermined one of the plurality of sample receiving stations (108) based, at least in part, on an associated one of the plurality of sample test tracks (102).

3. The system of claim 2, wherein each of the plurality of sample test tracks (102) comprises a mix of test stations (104), and wherein at least one of the plurality of sample test tracks (102) has a different mix of test stations (104) than another, of the plurality of sample test tracks (102), and wherein the remote sample delivery system (110) is configured to navigate to one of the plurality of sample receiving stations (108) based, at least in part, on the mix of test stations (104) of an associated one of the plurality of sample test tracks (102).

4. The system of claim 3, wherein the sample identifier corresponds to a series of tests to be performed on the biological sample and wherein the remote sample delivery system (110) is configured to navigate to the one of the plurality of sample receiving stations (108) based on the mix of test stations (104) of the associated one of the plurality of sample tracks being able to perform the series of tests.

5. The system of claim 2, wherein each of the plurality of sample test tracks (102) has an availability status and wherein the remote sample delivery system (110) is configured to navigate to the one of the plurality of sample receiving stations (108) based on the availability status of the associated one of the plurality of sample tracks.

6. The system of claim 5, wherein each of the plurality of sample test tracks (102) is configured to update its availability status based, at least in part, on an expected wait time for a sample to be tested.

7. The system of claim 1, wherein the remote sample delivery system (110) is configured to navigate to a plurality of sample receipt locations and secure at least one container at each of the plurality of sample receipt locations.

8. A method, comprising:
securing, with a remote sample delivery system (110), a container (116) for a biological sample, the container (116) including a sample identifier, wherein the remote sample delivery system (110) comprises an aerial unmanned autonomous vehicle (112) and a sample container securing mechanism (114) secured to the aerial unmanned autonomous vehicle (112);
automatically navigating, with the remote sample delivery system (110), to a sample receiving station (108), upon the container (116) being secured to the remote sample delivery system (110), wherein automatically navigating is further based, at least in part, on the sample identifier;
receiving, with the sample receiving station (108), the container (116); and
sequentially delivering, with a container conveyance system (106), the container (116) to individual ones of a plurality of test stations (104) of a sample test track (102) based, at least in part, on the sample identifier,
wherein the sample receiving station (108) is coupled to a pre-analytical test station (104') of the sample test track (102), and
wherein the sample receiving station (108) includes a landing pad for the aerial unmanned autonomous vehicle (112).

9. The method of claim 8, wherein the biological sample test system (100) further comprises a plurality of sample receiving stations (108) and a plurality of sample test tracks (102), each individual ones of the sample test tracks (102) associated with one of the plurality of sample receiving stations (108), and wherein automatically navigating is to a predetermined one of the plurality of sample receiving stations (108) based, at least in part, on an associated one of the plurality of sample test tracks (102).

10. The method of claim 9, wherein each of the plurality of sample test tracks (102) comprises a mix of test stations (104), and wherein at least one of the plurality of sample test tracks (102) has a different mix of test stations (104) than another of the plurality of sample test tracks (102), and wherein automatically navigating is to one of the plurality of sample receiving stations (108) based, at least in part, on the mix of test stations (104) of an associated one of the plurality of sample test tracks (102).

11. The method of claim 10, wherein the sample identifier corresponds to a series of tests to be performed on the biological sample and wherein automatically navigating is to the one of the plurality of sample receiving stations (108) based on the mix of test stations (104) of the associated one of the plurality of sample tracks being able to perform the series of tests.

12. The method of claim 9, wherein each of the plurality of sample test tracks (102) has an availability status and wherein automatically navigating is to the one of the plurality of sample receiving stations (108) based on the availability status of the associated one of the plurality of sample tracks.

13. The method of claim 12, further comprising each of the plurality of sample test tracks (102) updating its availability status based, at least in part, on an expected wait time for a sample to be tested.

14. The method of claim 8, wherein automatically navigating is to a plurality of sample receipt locations and secure at least one container (116) at each of the plurality of sample receipt locations.

## Patentansprüche

1. Testsystem für biologische Proben (100), umfassend:
ein Probenfernliefersystem (110), das ein unbemanntes autonomes Luftfahrzeug (112) und einen Probenbehälter-Sicherungsmechanismus (114) umfasst, der an dem unbemannten autonomen Luftfahrzeug (112) befestigt ist und konfiguriert ist, um einen Behälter (116) für eine biologische Probe zu sichern, wobei der Behälter (116) eine Probenkennung einschließt;
eine Probenempfangsstation (108), die konfiguriert ist, um den Behälter (116) von dem Probenfernliefersystem (110) zu empfangen, wobei das Probenfernliefersystem (110) konfiguriert ist, um automatisch zu der Probenempfangsstation (108) zu navigieren, wenn der Behälter (116) an dem entfernten Probenliefersystem (110) befestigt wird, und wobei das Probenfernliefersystem (110) konfiguriert ist, um zur Probenempfangsstation (108) zu navigieren, zumindest teilweise basierend auf der Probenkennung; und
eine Probenteststrecke (102), die eine präanalytische Teststation (104') und eine Vielzahl von Teststationen (104) umfasst, und ein Behälterfördersystem (106), das konfiguriert ist, um den Behälter (116) nacheinander an einzelne der Vielzahl von Teststationen (104) zu liefern, die zumindest teilweise auf der Probenkennung basieren,
wobei die Probenempfangsstation (108) mit der präanalytischen Teststation (104') verbunden ist, und
wobei die Probenempfangsstation (108) einen Landeplatz für das unbemannte autonome Luftfahrzeug (112) einschließt.

2. System nach Anspruch 1, wobei das biologische Probentestsystem (100) weiter eine Vielzahl von Probenempfangsstationen (108) und eine Vielzahl von Probenteststrecken (102) umfasst, wobei jede einzelne der Probenteststrecken (102) mit einer der Vielzahl von Probenempfangsstationen (108) verbunden ist, und wobei das Probenfernliefersystem (110) konfiguriert ist, um den Behälter (116) an eine vorbestimmte der Vielzahl von Probenaufnahmestationen (108) abzugeben, die zumindest teilweise auf einer zugehörigen der Vielzahl von Probenteststrecken (102) basiert.

3. System nach Anspruch 2, wobei jede der Vielzahl von Probenteststrecken (102) eine Mischung von Teststationen (104) umfasst, und wobei mindestens eine der Vielzahl von Probenteststrecken (102) eine andere Mischung von Teststationen (104) aufweist als eine andere der Vielzahl von Probenteststrecken (102), und wobei das Probenfernliefersystem (110) konfiguriert ist, um zu einer der Vielzahl von Probenempfangsstationen (108) zu navigieren, die zumindest teilweise auf der Mischung von Teststationen (104) einer zugehörigen der Vielzahl von Probenteststrecken (102) basiert.

4. System nach Anspruch 3, wobei die Probenkennung einer Reihe von Tests entspricht, die an der biologischen Probe durchzuführen sind, und wobei das Probenfernliefersystem (110) konfiguriert ist, um zu dem einen der Vielzahl von Probenempfangsstationen (108) zu navigieren, basierend auf der Mischung von Teststationen (104) der zugehörigen einen der Vielzahl von Probenstrecken, die in der Lage ist, die Testreihe durchzuführen.

5. System nach Anspruch 2, wobei jede der Vielzahl von Probenteststrecken (102) einen Verfügbarkeitsstatus hat und wobei das Probenfernliefersystem (110) konfiguriert ist, um basierend auf dem Verfügbarkeitsstatus der zugehörigen einen der Vielzahl von Probenstrecken zu der einen der Vielzahl von Probenaufnahmestationen (108) zu navigieren.

6. System nach Anspruch 5, wobei jede der Vielzahl von Probenteststrecken (102) konfiguriert ist, um ihren Verfügbarkeitsstatus zumindest teilweise basierend auf einer erwarteten Wartezeit für eine zu testende Probe zu aktualisieren.

7. System nach Anspruch 1, wobei das Probenfernliefersystem (110) konfiguriert ist, um zu einer Vielzahl von Probenempfangsstellen zu navigieren und mindestens einen Behälter an jeder der Vielzahl von Probenempfangsstellen zu sichern.

8. Verfahren, umfassend:
Befestigen eines Behälters (116) für eine biologische Probe an einem Probenfernliefersystem (110), wobei der Behälter (116) eine Probenkennung einschließt, wobei das Probenfernliefersystem (110) ein unbemanntes autonomes Luftfahrzeug (112) und einen am unbemannten autonomen Luftfahrzeug (112) befestigten Probenbehälter-Sicherungsmechanismus (114) umfasst;
automatisches Navigieren mit dem Probenfernliefersystem (110) zu einer Probenempfangsstation (108), wenn der Behälter (116) an dem Probenfernliefersystem (110) befestigt ist, wobei das automatische Navigieren weiter zumindest teilweise auf der Probenkennung basiert;
Empfangen des Behälters (116) mit der Probenempfangsstation (108); und
sequentielles Liefern des Behälters (116) mit einem Behälterfördersystem (106) zu einzelnen einer Vielzahl von Teststationen (104) einer Probenteststrecke (102), die zumindest teilweise auf der Probenkennung basiert,
wobei die Probenempfangsstation (108) mit einer präanalytischen Teststation (104') der Probenteststrecke (102) gekoppelt ist, und
wobei die Probenempfangsstation (108) einen Landeplatz für das unbemannte autonome Luftfahrzeug (112) einschließt.

9. Verfahren nach Anspruch 8, wobei das biologische Probentestsystem (100) weiter eine Vielzahl von Probenempfangsstationen (108) und eine Vielzahl von Probenteststrecken (102) umfasst, wobei jede einzelne der Probenteststrecken (102) mit einer der Vielzahl von Probenempfangsstationen (108) verbunden ist, und wobei das automatische Navigieren zu einer vorbestimmten aus der Vielzahl von Probenempfangsstationen (108) zumindest teilweise basierend auf einer zugehörigen aus der Vielzahl von Probenteststrecken (102) erfolgt.

10. Verfahren nach Anspruch 9, wobei jede der Vielzahl von Probenteststrecken (102) eine Mischung von Teststationen (104) umfasst, und wobei mindestens eine der Vielzahl von Probenteststrecken (102) eine andere Mischung von Teststationen (104) aufweist als eine andere der Vielzahl von Probenteststrecken (102), und wobei das automatische Navigieren zu einer der Vielzahl von Probenempfangsstationen (108) zumindest teilweise auf der Mischung von Teststationen (104) einer zugehörigen der Vielzahl von Probenteststrecken (102) basiert.

11. Verfahren nach Anspruch 10, wobei die Probenkennung einer Reihe von Tests entspricht, die an der biologischen Probe durchzuführen sind, und wobei das automatische Navigieren zu der einen aus der Vielzahl von Probenempfangsstationen (108) basierend auf der Mischung von Teststationen (104) der zugehörigen einen aus der Vielzahl von Probenstrecken erfolgt, die in der Lage sind, die Reihe von Tests durchzuführen.

12. Verfahren nach Anspruch 9, wobei jede der Vielzahl von Probenteststrecken (102) einen Verfügbarkeitsstatus hat und wobei das automatische Navigieren zu der einen aus der Vielzahl von Probenempfangsstationen (108) basierend auf dem Verfügbarkeitsstatus der zugehörigen einen aus der Vielzahl von Probenstrecken erfolgt.

13. Verfahren nach Anspruch 12, weiter umfassend, Aktualisieren durch jede der Vielzahl von Probenteststrecken (102) ihres Verfügbarkeitsstatus zumindest teilweise basierend auf einer erwarteten Wartezeit für eine zu testende Probe.

14. Verfahren nach Anspruch 8, wobei das automatische Navigieren zu einer Vielzahl von Probenempfangsstellen erfolgt und mindestens ein Behälter (116) an jeder der Vielzahl von Probenempfangsstellen gesichert wird.

## Revendications

1. Système de test d'échantillon biologique (100), comprenant :
un système de distribution d'échantillon à distance (110) comprenant un véhicule autonome sans pilote aérien (112) et un mécanisme de fixation de récipient d'échantillon (114) fixé au véhicule autonome sans pilote aérien (112), configuré pour fixer un récipient (116) pour un échantillon biologique, le récipient (116) incluant un identifiant d'échantillon ;
une station de réception d'échantillon (108), configurée pour recevoir le récipient (116) en provenance du système de distribution d'échantillon à distance (110), dans lequel le système de distribution d'échantillon à distance (110) est configuré pour naviguer automatiquement vers la station de réception d'échantillon (108) lorsque le récipient (116) est fixé au système de distribution d'échantillon à distance (110), et dans lequel le système de distribution d'échantillon à distance (110) est configuré pour naviguer vers la station de réception d'échantillon (108) sur la base, au moins en partie, de l'identifiant d'échantillon ; et
une piste de test d'échantillon (102), comprenant une station de test pré-analytique (104') et une pluralité de stations de test (104) et un système de transport de récipient (106) configuré pour délivrer de manière séquentielle le récipient (116) vers des stations individuelles parmi la pluralité de stations de test (104) sur la base, au moins en partie, de l'identifiant d'échantillon,
dans lequel la station de réception d'échantillon (108) est couplée à la station de test pré-analytique (104'), et
dans lequel la station de réception d'échantillon (108) inclut une aire d'atterrissage pour le véhicule autonome sans pilote aérien (112).

2. Système selon la revendication 1, dans lequel le système de test d'échantillon biologique (100) comprend en outre une pluralité de stations de réception d'échantillon (108) et une pluralité de pistes de test d'échantillon (102), chaque piste individuelle parmi les pistes de test d'échantillon (102) étant associée à une station parmi la pluralité de stations de réception d'échantillon (108), et dans lequel le système de distribution d'échantillon à distance (110) est configuré pour délivrer le récipient (116) vers une station prédéterminée parmi la pluralité de stations de réception d'échantillon (108) sur la base, au moins en partie, d'une piste associée parmi la pluralité de pistes de test d'échantillon (102).

3. Système selon la revendication 2, dans lequel chaque piste parmi la pluralité de pistes de test d'échantillon (102) comprend un mélange de stations de test (104), et dans lequel au moins une piste parmi la pluralité de pistes de test d'échantillon (102) présente un mélange différent de stations de test (104) par rapport à d'autres de la pluralité de pistes de test d'échantillon (102), et dans lequel le système de distribution d'échantillon à distance (110) est configuré pour naviguer vers une station parmi la pluralité de stations de réception d'échantillon (108) sur la base, au moins en partie, du mélange de stations de test (104) d'une piste associée parmi la pluralité de pistes de test d'échantillon (102).

4. Système selon la revendication 3, dans lequel l'identifiant d'échantillon correspond à une série de tests à mettre en œuvre sur l'échantillon biologique et dans lequel le système de distribution d'échantillon à distance (110) est configuré pour naviguer vers la station parmi la pluralité de stations de réception d'échantillon (108) sur la base du mélange de stations de test (104) de la piste associée parmi la pluralité de pistes d'échantillon capables de mettre en œuvre la série de tests.

5. Système selon la revendication 2, dans lequel chaque piste parmi la pluralité de pistes de test d'échantillon (102) présente un statut de disponibilité et dans lequel le système de distribution d'échantillon à distance (110) est configuré pour naviguer vers la station parmi la pluralité de stations de réception d'échantillon (108) sur la base du statut de disponibilité de la piste associée parmi la pluralité de pistes d'échantillon.

6. Système selon la revendication 5, dans lequel chaque piste parmi la pluralité de pistes de test d'échantillon (102) est configurée pour mettre à jour son statut de disponibilité sur la base, au moins en partie, d'un temps d'attente attendu pour un échantillon à tester.

7. Système selon la revendication 1, dans lequel le système de distribution d'échantillon à distance (110) est configuré pour naviguer vers une pluralité d'emplacements de réception d'échantillon et fixer au moins un récipient à chaque emplacement parmi la pluralité d'emplacements de réception d'échantillon.

8. Procédé, comprenant :
fixer, avec un système de distribution d'échantillon à distance (110), un récipient (116) pour un échantillon biologique, le récipient (116) incluant un identifiant d'échantillon, dans lequel le système de distribution d'échantillon à distance (110) comprend un véhicule autonome sans pilote aérien (112) et un mécanisme de fixation de récipient d'échantillon (114) fixé au véhicule autonome sans pilote aérien (112) ;
naviguer automatiquement, avec le système de distribution d'échantillon à distance (110), vers une station de réception d'échantillon (108), lorsque le récipient (116) est fixé au système de distribution d'échantillon à distance (110), dans lequel la navigation de manière automatique se fait en outre sur la base, au moins en partie, de l'identifiant d'échantillon ;
recevoir, avec la station de réception d'échantillon (108), le récipient (116) ; et
délivrer de manière séquentielle, avec un système de transport de récipient (106), le récipient (116) vers des stations individuelles parmi une pluralité de stations de test (104) d'une piste de test d'échantillon (102) sur la base, au moins en partie, de l'identifiant d'échantillon,
dans lequel la station de réception d'échantillon (108) est couplée à une station de test pré-analytique (104') de la piste de test d'échantillon (102), et
dans lequel la station de réception d'échantillon (108) inclut une aire d'atterrissage pour le véhicule autonome sans pilote aérien (112).

9. Procédé selon la revendication 8, dans lequel le système de test d'échantillon biologique (100) comprend en outre une pluralité de stations de réception d'échantillon (108) et une pluralité de pistes de test d'échantillon (102), chaque piste individuelle parmi les pistes de test d'échantillon (102) étant associée à une station parmi la pluralité de stations de réception d'échantillon (108), et dans lequel la navigation de manière automatique vers une station prédéterminée parmi la pluralité de stations de réception d'échantillon (108) se fait sur la base, au moins en partie, d'une piste associée parmi la pluralité de pistes de test d'échantillon (102).

10. Procédé selon la revendication 9, dans lequel chaque piste parmi la pluralité de pistes de test d'échantillon (102) comprend un mélange de stations de test (104), et dans lequel au moins une piste parmi la pluralité de pistes de test d'échantillon (102) présente un mélange différent de stations de test (104) par rapport à d'autres de la pluralité de pistes de test d'échantillon (102), et dans lequel la navigation de manière automatique vers une station parmi la pluralité de stations de réception d'échantillon (108) se fait sur la base, au moins en partie, du mélange de stations de test (104) d'une piste associée parmi la pluralité de pistes de test d'échantillon (102).

11. Procédé selon la revendication 10, dans lequel l'identifiant d'échantillon correspond à une série de tests à mettre en œuvre sur l'échantillon biologique et dans lequel la navigation de manière automatique vers la station parmi la pluralité de stations de réception d'échantillon (108) se fait sur la base du mélange de stations de test (104) de la piste associée parmi la pluralité de pistes d'échantillon capables de mettre en œuvre la série de tests.

12. Procédé selon la revendication 9, dans lequel chaque piste parmi la pluralité de pistes de test d'échantillon (102) présente un statut de disponibilité et dans lequel la navigation de manière automatique vers la station parmi la pluralité de stations de réception d'échantillon (108) se fait sur la base du statut de disponibilité de la piste associée parmi la pluralité de pistes d'échantillon.

13. Procédé selon la revendication 12, comprenant en outre chaque piste parmi la pluralité de pistes de test d'échantillon (102) mettant à jour son statut de disponibilité sur la base, au moins en partie, d'un temps d'attente attendu pour un échantillon à tester.

14. Procédé selon la revendication 8, dans lequel la navigation de manière automatique se fait vers une pluralité d'emplacements de réception d'échantillon et permet de fixer au moins un récipient (116) à chaque emplacement parmi la pluralité d'emplacements de réception d'échantillon.
